# FASCICULE DE BREVET EUROPEEN

(11) **EP 4 308 795 B1**
(45) Date de publication et mention de la délivrance du brevet: **29.04.2026**
(21) Numéro de dépôt: 22713703.1
(22) Date de dépôt: 08.03.2022
(51) Int. Cl.: F01D 7/02, B64C 11/38, F01D 25/16, F01D 25/18, F04D 29/36, F16H 57/04

(54) **MODULE DE SOUFFLANTE ÉQUIPÉ D'UN DISPOSITIF DE TRANSFERT D'HUILE**
FANMODUL AUSGESTATTET MIT EINER ÖLTRANSFERVORRICHTUNG
FAN MODULE EQUIPPED WITH AN OIL TRANSFER DEVICE

(30) Priorité: 16.03.2021 FR 2102623
(43) Date de publication de la demande: 24.01.2024
(73) Titulaire: SAFRAN AIRCRAFT ENGINES, 75015 Paris (FR)
(72) Inventeur: FRANZ, Caroline Marie, 77550 MOISSY-CRAMAYEL (FR); CHARIER, Gilles Alain Marie, 77550 MOISSY-CRAMAYEL (FR); MAINE, Hervé Christian Denis, 77550 MOISSY-CRAMAYEL (FR); MORREALE, Serge René, 77550 MOISSY-CRAMAYEL (FR)
(74) Mandataire: Gevers & Orès
(86) Numéro de dépôt international: PCT/FR2022/050415
(87) Numéro de publication internationale: WO 2022/195195

(56) Documents cités:
- EP-A1- 3 138 771
- EP-A1- 3 179 044
- WO-A2-2013/011225
- GB-A- 824 332
- US-A1- 2004 037 483
- US-B1- 8 484 942

## Description

### Domaine technique de l'invention

La présente invention concerne un module de soufflante pour une turbomachine d'aéronef, ce module comportant un dispositif de transfert d'huile.

### Arrière-plan technique

L'arrière-plan technique comprend notamment les documents EP-A1-3179044, US-A1-2004/037483, EP-A1-3 138 771, WO-A2-2013/011225, GB-A-824 332 et US-B1-8,484,942.

Une turbomachine d'aéronef comprend classiquement un générateur de gaz comportant, de l'amont vers l'aval selon le sens d'écoulement des gaz en fonctionnement, au moins un compresseur, une chambre annulaire de combustion et au moins une turbine.

Les gaz qui pénètrent dans le générateur de gaz sont comprimés dans le ou les compresseurs puis mélangés à du carburant et brûlés dans la chambre de combustion. Les gaz de combustion s'écoulent et se détendent dans la ou les turbines pour entraîner son rotor ou leurs rotors.

Dans le cas d'une turbomachine à double corps, respectivement basse pression et haute pression, le rotor de la turbine haute pression est relié par un arbre haute pression au rotor du compresseur haute pression, et le rotor de la turbine basse pression est relié par un arbre basse pression au rotor du compresseur basse pression.

La turbomachine peut être équipée d'une ou plusieurs hélices, carénées ou non carénées. Dans le cas d'une hélice carénée située à l'amont du générateur de gaz, cette hélice est appelée soufflante et est entraînée par l'arbre basse pression du générateur de gaz.

La soufflante génère un flux de gaz en fonctionnement qui se divise en un premier flux, appelé flux primaire qui s'écoule dans le générateur de gaz comme évoqué dans ce qui précède, et en un second flux, appelé flux secondaire, qui s'écoule autour du générateur de gaz.

Le taux de dilution, qui est le rapport entre le débit du flux secondaire et le débit du flux primaire, est de plus en plus important dans les turbomachines modernes, ce qui se traduit par une augmentation du diamètre de la soufflante et une diminution du diamètre du générateur de gaz.

Pour limiter la vitesse de rotation de la soufflante, en particulier des turbomachines à fort taux de dilution, il est connu d'entraîner cette soufflante par l'intermédiaire d'un réducteur en général du type à train épicycloïdal ou planétaire. L'arbre basse pression entraîne ainsi la soufflante par l'intermédiaire du réducteur.

Une soufflante, ou une hélice en général, peut comprendre des pales à calage variable, c'est-à-dire que chacune des pales a une orientation autour d'un axe radial qui peut être réglée avec précision. Les pales sont portées par un moyeu en forme d'anneau polygonal et sont déplacées en rotation autour de ces axes par l'intermédiaire d'un actionneur hydraulique commun qui est monté à l'intérieur du moyeu. Cet actionneur est alimenté en huile et peut se situer dans un repère tournant lorsqu'il est solidaire en rotation du moyeu et de la soufflante.

La turbomachine comprend un système de lubrification comportant un réservoir d'huile et une pompe, qui est en général situé dans un repère fixe. On comprend donc que l'alimentation en huile de l'actionneur depuis le système de lubrification doit se faire par un dispositif de transfert d'huile depuis un repère fixe jusqu'à un repère tournant. Un dispositif de ce type est couramment appelé OTB, acronyme de l'expression anglo-saxonne *Oil Transfer Bearing.*

Ce type de dispositif peut être monté dans une turbomachine à soufflante du type précité pour alimenter l'actionneur en huile mais aussi pour alimenter le réducteur en huile de lubrification. Ce type de dispositif peut aussi être monté dans un autre type de turbomachine, telle que par exemple une turbomachine équipée d'une hélice non carénée à pales à calage variable, du type turbopropulseur.

Dans la technique actuelle, un dispositif de transfert d'huile comprend un anneau de stator qui comporte une surface cylindrique interne et des canalisations internes d'huile qui débouchent chacune sur cette surface cylindrique interne. Ces canalisations sont reliées par des conduites au système de lubrification précité.

Le dispositif comprend en outre un arbre engagé dans l'anneau et mobile en rotation autour d'un axe à l'intérieur de cet anneau. L'arbre comporte une surface cylindrique externe s'étendant à l'intérieur de la surface cylindrique interne de l'anneau, et des canalisations internes d'huile qui débouchent chacune sur cette surface cylindrique externe. Ces canalisations sont reliées par des conduites à l'actionneur pour son alimentation en huile.

Dans la technique actuelle, la surface cylindrique externe de l'arbre comprend des rainures annulaires de logement de segments annulaires d'étanchéité. Ces segments sont aptes à se déplacer dans les rainures et sont configurés pour prendre appui radialement sur la surface interne de l'anneau pour limiter et maitriser les fuites d'huile. Les débouchés des canalisations précitées sont situés entre deux segments adjacents qui assurent donc qu'un maximum d'huile apportée par chaque canalisation de l'anneau alimente une canalisation correspondante de l'arbre. Le nombre de segments est égal au double du nombre de canalisations. Le document GB-A-824,332 décrit un dispositif de transfert d'huile de ce type. Cependant, cette technologie n'est pas satisfaisante pour plusieurs raisons. Les tolérances de fabrication et de montage des pièces font qu'il est difficile de maitriser précisément ces fuites. Le dispositif comprend de nombreuses pièces, ce qui complexifie le montage. La fabrication et l'assemblage d'un tel dispositif sont donc relativement longs et coûteux. Par ailleurs, plus le nombre de canalisations du dispositif est important et plus le nombre de segments d'étanchéité est important et plus la dimension axiale et donc l'encombrement axial du dispositif sont importants pour pouvoir monter ces différents segments. Un dispositif de transfert d'huile peut être complexe à intégrer dans une turbomachine du fait de son encombrement. Enfin, la durée de vie d'un tel dispositif est en général limitée du fait de désalignements potentiels entre l'arbre et l'anneau en fonctionnement et de l'usure des segments d'étanchéité qui peut être accentuée par ces désalignements ainsi que par la vitesse de rotation de l'arbre. Plus le diamètre du dispositif est important, et plus la vitesse périphérique de l'arbre et l'usure des segments sont importantes.

Un autre inconvénient des dispositifs de la technique actuelle est que leur installation et montage dans une turbomachine est long et complexe. Le dispositif peut être monté en amont ou en aval du réducteur. L'emplacement préféré du dispositif est toutefois en aval du réducteur pour plusieurs raisons.

Une implantation du dispositif en amont du réducteur implique des joints tournants à grand diamètre qui sont sources de fuite et rejection thermique. De plus, on cherche en général à disposer la soufflante le plus près possible du carter d'entrée de la turbomachine, pour éviter le plus possible le porte-à-faux de la soufflante. Enfin, la longueur de la turbomachine doit être la plus courte possible pour minimiser la trainée de sa nacelle. Il est donc préférable de réaliser une intégration du dispositif en aval du redresseur.

Dans ce cas, l'alimentation en huile des canalisations de l'anneau se ferait par des conduites qui passeraient à travers le carter d'entrée et qui seraient raccordées à ces canalisations en direction radiale. L'accès au dispositif depuis l'amont ne serait pas possible lors d'une opération de maintenance. La fixation de l'anneau du dispositif à un stator de la turbomachine, ainsi que le démontage de l'anneau vis-à-vis de ce stator, devraient se faire depuis l'aval de la turbomachine et de l'enceinte de lubrification dans laquelle est située le réducteur. Ceci impliquerait de devoir démonter le compresseur basse pression de la turbomachine ainsi que les équipements montés dans cette zone, ce qui serait long et fastidieux.

L'invention propose ainsi un dispositif de transfert d'huile perfectionné qui résout tout ou partie des problèmes de la technique antérieure.

### Résumé de l'invention

L'invention concerne un module de soufflante pour une turbomachine d'aéronef, ce module comportant une soufflante qui comporte un arbre de soufflante et des aubes de soufflante à calage variable, et un dispositif de transfert d'huile qui est configuré pour assurer un transfert d'huile entre un stator et un actionneur qui est solidaire en rotation de l'arbre de soufflante et qui est configuré pour contrôler le calage des aubes de soufflante, ce dispositif comportant :
- un anneau de stator comportant une surface cylindrique interne et des canalisations internes d'huile qui débouchent chacune sur ladite surface cylindrique interne, et
- un arbre engagé dans ledit anneau et comportant une surface cylindrique externe s'étendant à l'intérieur de ladite surface cylindrique interne, l'arbre comportant des canalisations internes d'huile qui débouchent chacune sur ladite surface cylindrique externe, l'arbre comportant en outre un organe de fixation configuré pour être fixé à un rotor de la turbomachine pour son entraînement en rotation autour d'un axe,
caractérisé en ce qu'il comprend en outre :
- un palier lisse situé entre lesdites surfaces cylindriques interne et externe, et
- des paliers à roulement montés entre l'anneau et l'arbre, de part et d'autre du palier lisse,
et en ce que l'anneau est monté avec un degré de liberté en direction axiale sur l'arbre et est immobilisé en direction circonférentielle autour de l'arbre par l'intermédiaire de premiers éléments portés par l'anneau et configurés pour coopérer par engagement mâle-femelle en direction axiale avec des seconds éléments complémentaires portés par ledit stator. L'invention propose ainsi un dispositif de transfert d'huile dépourvu d'organes ou de segments d'étanchéité entre les surfaces cylindriques en regard de l'anneau de stator et de l'arbre. A la place, un palier lisse est prévu entre ces surfaces. Des paliers à roulement sont montés de part et d'autre de ce palier lisse de façon à garantir l'épaisseur radiale du palier lisse, quels que soient le régime de la turbomachine et la vitesse périphérique de l'arbre du dispositif de transfert. Les paliers à roulement sont automatiquement lubrifiés par l'huile qui fuit du palier lisse en fonctionnement. Les paliers à roulement assurent en outre la limitation des fuites d'huile à l'extérieur du palier lisse et du dispositif. Les paliers à roulement permettent en outre de supprimer les risques de désalignements entre l'anneau et l'arbre et donc les risques de contact entre eux et d'usure. Les segments d'étanchéité ne constituent donc plus des pièces d'usure du dispositif qui a donc une durée de vie optimisée par rapport à la technique antérieure.

Selon l'invention, le dispositif se présente sous la forme d'une « cartouche » lors de son montage. Dans la présente demande, on entend par « cartouche », l'ensemble formé par l'arbre et l'anneau d'un dispositif, qui sont pré-montés l'un à l'intérieur de l'autre avant de monter cet ensemble dans une turbomachine.

Le dispositif est ainsi destiné à être fixé à un rotor de la turbomachine préalablement au montage de ce rotor et du dispositif au reste de la turbomachine. Ce montage est réalisé par translation axiale, de l'amont vers l'aval, et est rendu possible grâce au montage « flottant » de l'anneau sur l'arbre, c'est-à-dire grâce à la liberté de déplacement axial de l'anneau sur l'arbre. Lors du montage, les premiers éléments de l'anneau coopèrent par engagement mâle-femelle avec les seconds éléments du stator, ce qui permet de réaliser une liaison souple en aveugle qui maintient cette capacité de déplacement axial mais bloque en direction circonférentielle l'anneau vis-à-vis de l'arbre. Cette translation et cette coopération peuvent ainsi suffire à solidariser en rotation l'anneau vis-à-vis du stator de la turbomachine. L'anneau est ainsi immobile en rotation autour de l'axe de la turbomachine mais peut subir des micro-déplacements relatifs en direction axiale vis-à-vis de l'arbre du dispositif car l'anneau n'est pas immobilisé en direction axiale vis-à-vis du stator.

L'anneau est ainsi relié au stator avec une certaine « souplesse » du fait d'une liaison non rigide à ce stator. Cette souplesse est utile pour limiter les contraintes dans le dispositif et les risques de désalignements entre l'arbre et l'anneau du dispositif, garantissant ainsi un palier lisse d'épaisseur radiale constante à l'intérieur du dispositif.

Le module selon l'invention peut comprendre une ou plusieurs des caractéristiques suivantes, prises isolément les unes des autres, ou en combinaison les unes avec les autres :
- l'anneau comprend des premiers ports de raccordement fluidique débouchant en direction axiale, ces premiers ports étant raccordés aux canalisations internes de l'anneau et étant configurés pour coopérer par ledit engagement mâle-femelle avec des extrémités de conduites ou de douilles d'alimentation en huile ; ces premiers ports peuvent ainsi être assimilés auxdits premiers éléments ou à une partie de ces premiers éléments,
- le nombre de premiers ports est égal au nombre de canalisations de l'anneau, les premiers ports étant raccordés à des canalisations différentes de l'anneau ;
- les premiers ports sont situés sensiblement dans un même plan perpendiculaire audit axe ;
- l'anneau comprend un orifice de montage d'une goupille provisoire d'immobilisation en rotation de l'anneau sur l'arbre, cette goupille étant configurée pour être engagée dans un évidement du rotor précité de la turbomachine lors du montage du dispositif puis à être retiré après ce montage ;
- l'orifice a une orientation sensiblement radiale et est formé à la périphérie externe de l'anneau ;
- l'un des paliers à roulement est à rouleaux et l'autre des paliers à roulement est à billes ;
- l'anneau comprend un premier organe d'indexage orienté axialement, tel qu'une rainure, et configuré pour coopérer par ledit engagement mâle-femelle avec un second organe d'indexage orienté axialement, tel qu'un doigt, porté par ledit stator de la turbomachine lors dudit montage ; ce premier organe ou cette rainure peut ainsi être assimilé auxdits premiers éléments ou à une partie de ces premiers éléments ;
   -- le support comprend au moins une paroi tronconique ajourée ;
   -- une frette est montée à l'intérieur de l'anneau et définit ledit palier lisse avec ladite surface externe de l'arbre ;
   -- les bagues des paliers ont des diamètres internes identiques ;
   -- la frette a deux surfaces cylindriques s'étendant l'une autour de l'autre, dont une surface cylindrique de frettage sur l'anneau et une surface cylindrique de centrage sur l'arbre,
   -- la frette comprend des orifices qui sont situés en regard des débouchés des canalisations de l'anneau, et qui recouvrent par exemple des gorges annulaires formées au niveau de ces débouchés et/ou des débouchés des canalisations de l'arbre,
- la soufflante est entrainée en rotation par un réducteur, ledit dispositif étant monté en aval du réducteur et étant configuré pour alimenter en huile le réducteur ainsi que l'actionneur par des conduites traversant axialement le réducteur, et en particulier un porte-satellites du réducteur ;
- l'arbre du dispositif est fixé au porte-satellites du réducteur, et l'anneau du dispositif est fixé à un carter intermédiaire par un support annulaire qui entoure au moins en partie le dispositif ;
- un palier à roulement, et en particulier à rouleaux, est monté entre le porte-satellites et ledit support ;
- le support comprend une paroi annulaire comprenant des ouvertures de passage de conduites d'alimentation en huile des canalisations de l'anneau, et de préférence également de passage provisoire d'un câble reliée à une goupille d'immobilisation en rotation de l'anneau sur l'arbre ;
- le support comprend une paroi annulaire comprenant des seconds ports configurés pour coopérer par un autre engagement mâle-femelle avec des extrémités de conduites d'alimentation en huile, ces seconds ports débouchant radialement vers l'extérieur, et des troisièmes ports raccordés aux seconds ports et configurés pour coopérer par ledit engagement mâle-femelle avec des extrémités de douilles d'alimentation en huile dont des extrémités opposées sont engagées dans lesdits premiers ports de l'anneau ;
- le support porte ledit second organe ;
   -- le réducteur est du type épicycloïdal, c'est-à-dire à porte-satellites mobile en rotation et donc à couronne immobile en rotation ;
   -- le dispositif alimente le réducteur en huile de lubrification, et en particulier au moins une partie de ses paliers et dentures ;
   -- le dispositif est configuré pour alimenter l'actionneur à une pression d'huile comprise entre 2 et 200 bars, et de préférence entre 5 et 130 bars ;
   -- le dispositif est configuré pour alimenter le réducteur à une pression d'huile comprise entre 2 et 50 bars, et de préférence entre 5 et 20 bars.

La présente invention concerne également un procédé d'assemblage d'un module tel que décrit ci-dessus, comprenant les étapes de :
a) montage de l'anneau sur l'arbre du dispositif,
b) fixation de l'arbre du dispositif au rotor de la turbomachine,
c) montage de conduites et/ou de douilles d'alimentation en huile sur ledit stator de la turbomachine, et
d) déplacement en translation du rotor et du dispositif vers le stator, jusqu'à ce que les premiers ports du dispositif coopèrent avec lesdites conduites ou douilles.

Le procédé selon l'invention peut comprendre une ou plusieurs des étapes suivantes, prises isolément les unes des autres, ou en combinaison les unes avec les autres :
- le procédé comprend, après l'étape d), une étape e) de retrait de la goupille, cette goupille étant relié à un câble qui est tiré depuis l'extérieur de la turbomachine ;
- le procédé comprend, lors de l'étape d), la coopération par engagement desdits premier et second organes ;
   -- lors de l'étape d), des rouleaux portés par le porte-satellites du réducteur sont engagés dans une bague externe portés par ledit support, afin de former un palier à roulement de guidage du porte-satellites.

L'invention concerne également une turbomachine d'aéronef, comportant un module tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une demi vue schématique en coupe axiale d'une turbomachine équipée d'un dispositif de transfert d'huile,
[Fig.2] la figure 2 est une vue à plus grande échelle d'une partie de la figure 1,
[Fig.3] la figure 3 est une demi vue schématique en coupe axiale d'une turbomachine équipée d'un dispositif de transfert d'huile selon l'invention,
[Fig.4] la figure 4 est une vue à plus grande échelle du dispositif de la figure 3,
[Fig.5] la figure 5 est une vue similaire à celle de la figure 3 et illustre une étape de montage du dispositif conformément à un procédé de l'invention,
[Fig.6] la figure 6 est une vue à plus grande échelle du dispositif de la figure 5,
[Fig.7] la figure 7 est une demi vue schématique en coupe axiale du dispositif de la figure 3 et illustre une étape préliminaire du procédé selon l'invention, et
[Fig.8] la figure 8 est une autre vue très schématique en coupe axiale du dispositif de la figure 3, et permet de voir la disposition autour du dispositif de douilles d'alimentation en huile et de vis de fixation de l'arbre du dispositif.

### Description détaillée de l'invention

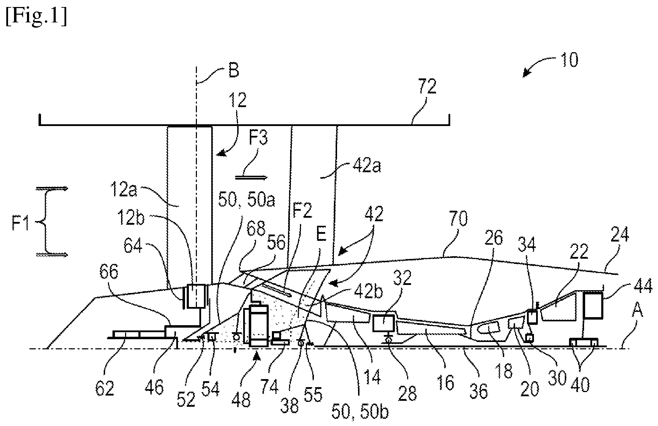

La figure 1 montre une turbomachine 10 qui comporte, de manière classique, une soufflante 12, un compresseur basse pression (BP) 14, un compresseur haute pression (HP) 16, une chambre annulaire de combustion 18, une turbine haute pression (HP) 20, une turbine basse pression (BP) 22 et une tuyère d'échappement 24.

Les rotors du compresseur haute pression 16 et de la turbine haute pression 20 sont reliés entre eux par un arbre haute pression 26 et forment avec lui un corps haute pression (HP) qui est guidé en rotation autour de l'axe A longitudinal de la turbomachine par des paliers à roulements 28, 30. Un premier palier 28 est monté entre une extrémité amont de l'arbre 26 et du corps HP et un carter inter compresseur 32 situé entre les compresseurs BP 14 et HP 16. Un second palier 30 est monté entre une extrémité aval de l'arbre 26 et du corps HP et un carter inter turbine 34 situé entre les turbines BP 22 et HP 20.

Les rotors du compresseur BP 14 et de la turbine BP 22 sont reliés entre eux par un arbre basse pression 36 et forment avec lui un corps basse pression (BP) qui est guidé en rotation autour de l'axe A longitudinal de la turbomachine par des paliers à roulements 38, 40. Au moins un palier 38 est monté entre une extrémité amont de l'arbre 36 du corps BP et un carter d'entrée 42 situé en amont du compresseur BP 14. D'autres paliers 40 sont montés entre une extrémité aval de l'arbre 36 du corps BP et un carter d'échappement 44 situé en aval de la turbine BP 22.

La soufflante 12 est entraînée par un arbre de soufflante 46 qui est entrainé par l'arbre BP 36 au moyen d'un réducteur 48. Ce réducteur 48 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 48 est positionné dans la partie amont de la turbomachine. Une structure fixe comportant schématiquement, ici, une partie amont 50a et une partie aval 50b qui compose le carter moteur ou stator 50 est agencée de manière à former une enceinte E entourant le réducteur 48. Cette enceinte E est ici fermée en amont par une étanchéité 52 au niveau d'un palier 54 permettant la traversée de l'arbre de soufflante 46, et en aval par une étanchéité 55 au niveau du palier 38 permettant la traversée de l'arbre BP 36.

L'enceinte E est disposée à l'intérieur du carter d'entrée 42 qui est situé entre un aubage redresseur d'entrée 56 et le compresseur BP 14.

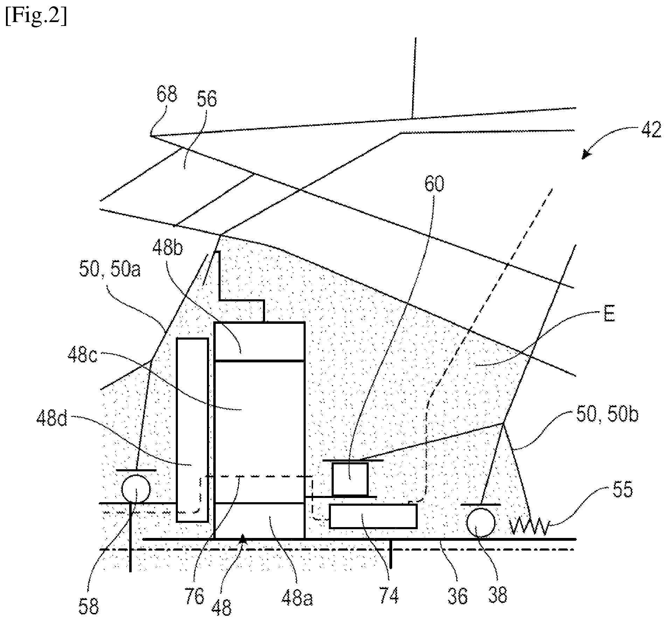

La figure 2 montre le réducteur 48 à plus grande échelle.

Le réducteur 48 comprend un solaire 48a centré sur l'axe A et accouplé à l'arbre BP 36 par exemple par l'intermédiaire de cannelures.

Le réducteur 48 comprend une couronne 48b qui est également centrée sur l'axe A et fixée au carter d'entrée 42.

Le réducteur 48 comprend enfin des satellites 48c qui sont disposés autour de l'axe A et engrenés avec le solaire 48a et la couronne 48b. Ces satellites 48c sont portés par un porte-satellites 48d qui est mobile en rotation autour de l'axe A et est relié à l'arbre de soufflante 46 pour son entraînement en rotation. Le porte-satellites 48d est guidé par des paliers 58, 60 portés par le carter d'entrée 42, ces paliers 58, 60 étant situés respectivement en amont et en aval du réducteur 48.

La soufflante 12 de la figure 1 comprend des pales 12a à calage variable et est associée à un actionneur 62 qui permet de commander de manière centralisée le positionnement des pales 12a autour de leurs axes B, qui sont en général des axes radiaux par rapport à l'axe A de la turbomachine. Chacune des pales 12a comprend un pied 12b formant un pivot qui est logé dans un logement d'un moyeu 64 en forme d'anneau polygonal, et qui est relié par un système de liaison 66 à un piston de l'actionneur 62. L'actionneur 62 s'étend le long de l'axe A et son piston est mobile en translation le long de cet axe, par exemple depuis une première position dans laquelle les pales 12a sont en drapeau jusqu'à une seconde position dans laquelle les pales 12a obstruent le passage d'air à travers la soufflante 12.

Le flux d'air F1 qui traverse la soufflante 12 est divisé en deux flux annulaires et coaxiaux en aval de la soufflante, par un séparateur annulaire 68 qui s'étend autour de l'aubage 56. Un premier flux d'air appelé flux primaire F2 s'écoule dans une veine primaire et traverse cet aubage 56 et s'écoule dans les compresseurs 14 et 16 pour être comprimé. Cet air comprimé est ensuite mélangé à du carburant puis brûlé dans la chambre de combustion 18. Les gaz de combustion sont ensuite détendus dans les turbines 20, 22 pour entraînés leurs rotors et les arbres BP 36 et HP 26, puis s'écoulent dans la tuyère 24.

Un second flux d'air appelé flux secondaire F3 s'écoule dans une veine secondaire qui est définie intérieurement par un carter annulaire de moteur 70 qui s'étend longitudinalement autour des compresseurs 14, 16, de la chambre de combustion 18 et des turbines 20, 22, et extérieurement par un carter annulaire de nacelle 72 qui s'étend longitudinalement autour de la soufflante 12 et d'une partie du moteur. Ce carter de nacelle 72 est relié au moteur par des aubes directrices de sortie 42a du carter d'entrée 42. Ces aubes directrices 42a sont structurales et sont configurées pour redresser le flux d'air sortant de la soufflante 12.

L'actionneur 62 est hydraulique et fonctionne avec un fluide, de l'huile, qui provient d'un système de lubrification situé en général dans la nacelle ou entre les compresseurs 14, 16 et le carter 70 (c'est-à-dire dans le moteur) et donc dans un repère fixe de la turbomachine. Au contraire, l'actionneur 62 est situé dans un repère tournant.

Comme cela est visible à la figure 2, la turbomachine 10 comprend un dispositif 74 de transfert d'huile depuis le repère fixe du moteur jusqu'au repère tournant dans lequel se situe l'actionneur 62.

Dans l'exemple représenté, le dispositif 74 est situé en aval du réducteur 48 et comprend de préférence plusieurs voies 76 d'alimentation en huile pour alimenter l'actionneur 62 mais aussi pour lubrifier le réducteur 48.Le trait en pointillé de la figure 2 symbolise une de ces voies sur tout son trajet, du repère fixe à l'actionneur 62 : traversée de la veine primaire jusqu'au dispositif 74, traversée du réducteur 48 (entre ses satellites ou à travers les axes de ces satellites), et cheminement le long du porte-satellites puis de l'arbre de soufflante 46.

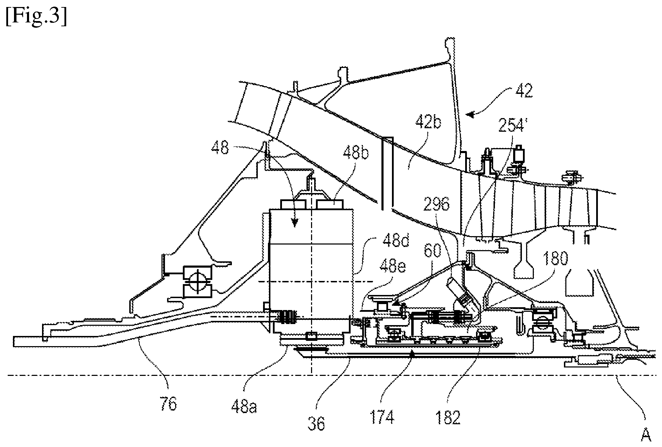

Les figures 3 à 8 illustrent un mode de réalisation d'un dispositif 174 de transfert d'huile conformément à l'invention.

Le dispositif 174 comprend :
- un anneau de stator 180 comportant une surface cylindrique interne 180a et des canalisations internes 180b d'huile qui débouchent chacune sur ladite surface cylindrique interne 180a, et
- un arbre 182 engagé dans l'anneau de stator 180 et mobile en rotation autour de l'axe A à l'intérieur de cet anneau 180, l'arbre 182 comportant une surface cylindrique externe 182a s'étendant à l'intérieur de la surface 180a, et des canalisations internes 182b d'huile qui débouchent chacune sur la surface 182a.

Les canalisations 180b sont disposées les unes derrière les autres le long de l'axe A. Elles sont au nombre de quatre dans l'exemple représenté. Bien que les canalisations 180b soient ici représentées dans un même plan axial, elles pourraient être situées respectivement dans des plans axiaux différents. Cela dépend notamment des conduites 192 auxquelles elles sont reliées et des bras 42b à travers lesquels transitent ces conduites. Dans encore une autre variante, les canalisations 180b pourraient comprendre des extrémités radialement externes situées dans un même plan axial et des extrémités réparties angulairement autour de l'axe A et débouchant sur la surface 180a.

Chacune des canalisations 180b comprend une extrémité radialement interne qui forme le débouché précité et une extrémité radialement externe qui forme un premier port 190 de raccordement à une douille 192 d'alimentation en huile.

Le port 190 forme une partie femelle et une extrémité de la douille 192 forme une partie mâle engagée de manière étanche dans le port 190.

Le port 190 et la douille 192 ont une orientation axiale donc la douille 192 et le port 190 sont engagés l'un dans l'autre par translation axiale.

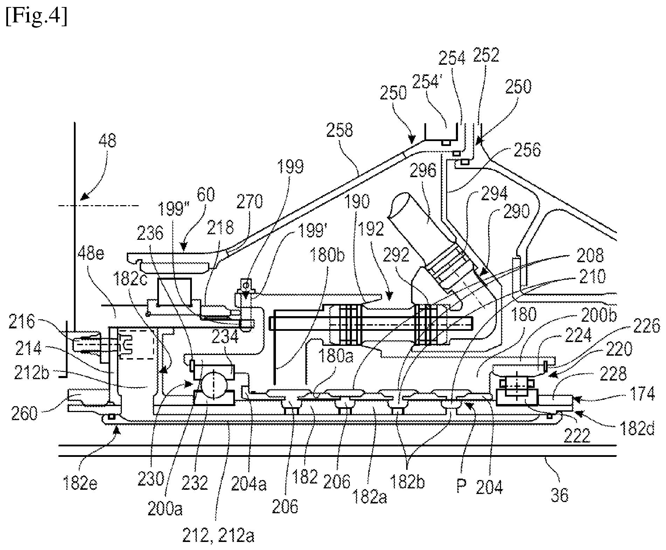

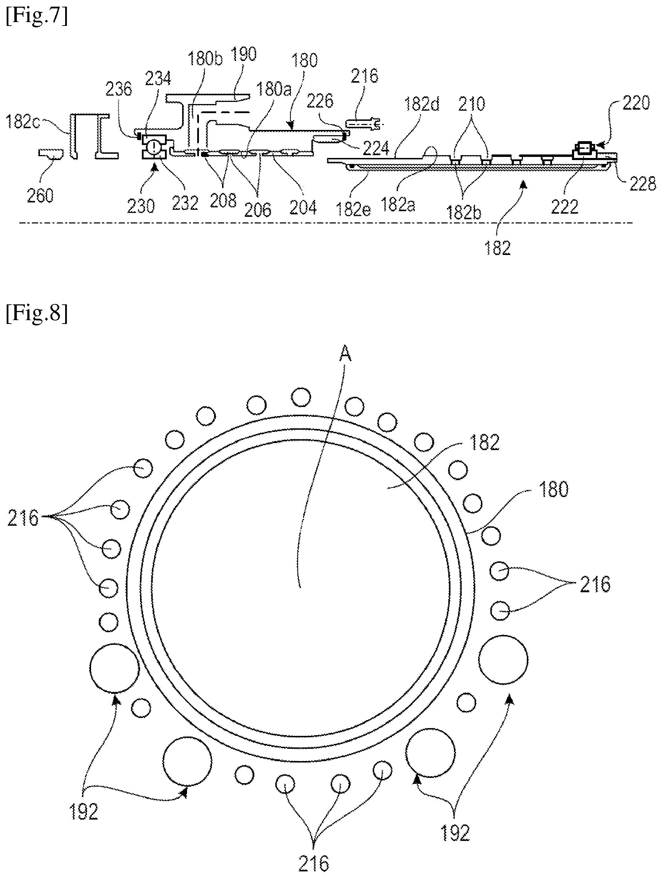

Parmi les douilles 192 raccordées à l'anneau 180, une est représentée à la figure 4. La figure 8 permet de constater que le nombre de douilles 192 est égal au nombre de canalisations 180b, et sont donc au nombre de quatre. Ces douilles 192 sont réparties sur une moitié inférieure de l'anneau 180 et du dispositif 174. Les douilles 192 sont par exemple situées à 4h, 5h, 7h et 8h par analogie avec le cadran d'une horloge.

Les douilles 192 ont leurs extrémités axiales opposées aux ports 190 qui sont engagées axialement dans des seconds ports d'un support annulaire 250, comme cela sera décrit plus en détail dans ce qui suit.

Dans l'exemple représenté, les douilles 192 sont du type « os de chien », c'est-à-dire qu'elles ont une forme générale en os de chien. Elles ont chacune une forme allongée avec des extrémités longitudinales élargies qui portent ici des joints toriques d'étanchéité qui coopèrent avec les ports 190.

L'anneau 180 a une forme générale cylindrique et comprend un rebord cylindrique amont 200a et un rebord cylindrique aval 200b. Ces rebords 200a, 200b ont des diamètres identiques ou similaires.

Une frette 204 est fixée à l'intérieur de l'anneau 180 de façon à recouvrir sa surface 180a. Cette frette 204 s'étend sur une majeure partie de la longueur de l'anneau 180 et comprend un rebord annulaire 204a radialement externe à son extrémité amont qui est en appui axial sur une portée cylindrique de l'anneau 180. Comme son nom l'indique, la frette 204 est montée par frettage dans l'anneau 180. Le frettage associé à l'appui de son rebord 204a assure l'immobilisation de la frette 204 vis-à-vis de l'anneau 180.

La frette 204 comprend une rangée annulaire d'orifices radiaux 206 au droit de chacune des canalisations 180b. Par ailleurs, une gorge annulaire 208 est formée à la périphérie interne de l'anneau 180 et au droit de chacune des canalisations 180b, cette gorge 208 étant fermée à l'intérieur par la frette 204. On comprend donc que chaque canalisation 180b alimente une gorge 208 et que chaque gorge 208 distribue de l'huile aux orifices 206 de la frette 204.

La frette 204 comprend une surface cylindrique externe de frettage qui est au contact de la surface interne 180a de l'anneau 180, et une surface cylindrique interne de centrage destinée à être séparée d'une distance radiale prédéterminée de la surface externe 182a de l'arbre 182 pour définir un palier lisse P.

L'arbre 182 ne porte pas de frette. Ceci permet de réduire le nombre d'interfaces d'empilage de tolérances. Conséquemment, les jeux sont fortement réduits entre rotor et stator par réduction du nombre d'interfaces.

Les canalisations 182b de l'arbre 182 ont toutes une orientation radiale et sont disposées les unes derrière les autres le long de l'axe A. Elles sont au nombre de quatre dans l'exemple représenté.

Une gorge annulaire 210 est formée à la périphérie externe de l'arbre 182 et au droit de chacune des canalisations 182b.

Chacune des canalisations 182b est reliée à une conduite 212 qui peut être intégrée à l'arbre 182. L'une de ces conduites 212, visible en section dans les figures, comprend une portion annulaire 212a qui s'étend autour de l'axe A et le long d'une majeure partie de la longueur de l'arbre 182. L'extrémité aval de cette portion 212a est reliée à la canalisation 182b la plus aval de l'arbre, et son extrémité amont est reliée à une portion radiale 212b qui est formée dans une nervure annulaire amont 214 de l'arbre. Cette nervure 214 sert à la fixation de l'arbre 182 du dispositif 174. Dans l'exemple représenté, l'arbre 182 du dispositif 174 est fixé au porte-satellites 48d du réducteur 48. Le porte-satellites 48d comprend un rebord cylindrique aval 48e sur la périphérique externe duquel est monté le palier 60, et à la périphérie interne duquel est engagé la nervure 214. Cette nervure 214 prend appui axialement vers l'amont sur une portée cylindrique du rebord 48e et est maintenue en appui axial contre cette portée par des vis 216 vissées depuis l'aval sur la périphérie interne du rebord 48e.

La figure 8 permet de constater que les vis 216 sont réparties autour de l'axe A et entre les douilles 192.

Le palier 60 est ici à roulement et comprend des rouleaux qui sont disposés entre deux bagues, respectivement interne et externe, la bague interne étant serrée axialement contre une autre portée cylindrique de la périphérie externe du rebord 48e par un écrou 218 vissé depuis l'aval sur cette périphérie.

L'anneau 180 comprend un orifice 199' de montage d'une goupille 199 provisoire d'immobilisation en rotation de l'anneau 180 sur l'arbre 182. Cette goupille 199 est configurée pour être engagée dans un évidement 199" du rebord 48e précité de la turbomachine lors du montage du dispositif 174 puis à être retirée après ce montage. Dans l'exemple représenté, l'orifice 199' a une orientation sensiblement radiale et est formé à la périphérie externe de l'anneau 180. L'évidement 199" est quant à lui formé par une encoche formée sur le bord aval libre du rebord 48e.

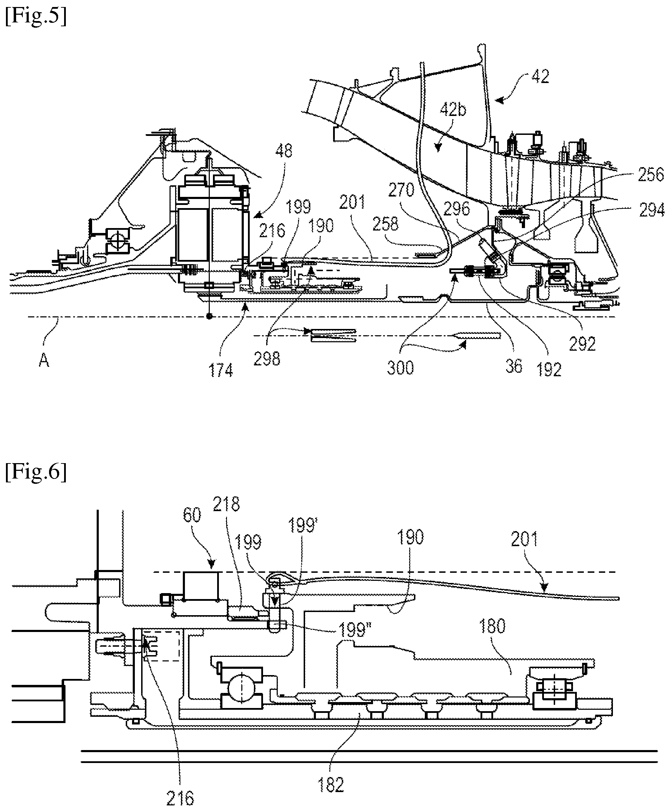

La goupille 199 comprend un corps cylindrique orienté radialement en position de montage, et relié à une tête comportant un orifice traversant d'attache d'une extrémité d'un câble 201 (cf. figure 6). Ce câble 201 est utilisé par un opérateur pour tirer sur la goupille 199, la désengager de l'orifice 199' et de l'évidement 199" et la retirer de la turbomachine. La tête est reliée à l'extrémité radialement externe du corps lorsque la goupille 199 est en position de montage.

Un premier palier à roulement 220 est monté entre le rebord 200b de l'anneau 180 et l'extrémité aval de l'arbre 182.

Le palier 220 est ici à roulement et comprend des rouleaux qui sont disposés entre deux bagues, respectivement interne 222 et externe 224. La bague externe 224 est montée à l'intérieur du rebord 200b est en appui axial sur une portée cylindrique de la périphérie interne du rebord 200b, situé à l'amont. A l'aval, la bague 224 est retenue axialement par un jonc annulaire 226 fendu engagé dans une rainure annulaire de la périphérie interne du rebord 200b.

La bague interne 222 est montée sur l'extrémité aval de l'arbre 182 et est en appui axial sur une portée cylindrique de l'arbre, situé à l'amont. A l'aval, la bague 222 est retenue axialement par une frette 228 fixée sur la périphérie externe de l'extrémité aval de l'arbre 182.

Un second palier à roulement 230 est monté entre le rebord 200a de l'anneau 180 et l'arbre 182.

Le palier 230 est ici à roulement et comprend des billes qui sont disposées entre deux bagues, respectivement interne 232 et externe 234.

La bague externe 234 est montée à l'intérieur du rebord 200a et est en appui axial sur une portée cylindrique de la périphérie interne du rebord 200a, situé à l'aval. A l'amont, la bague 232 est retenue axialement par un jonc annulaire 236 fendu engagé dans une rainure annulaire de la périphérie interne du rebord 200a.

La bague interne 232 est montée sur une partie de l'arbre 182 située entre la nervure 214 et les canalisations 182b. Cette bague 232 est en appui axial sur une portée cylindrique de l'arbre 182, situé à l'aval. A l'amont, la bague 232 est retenue axialement par une pièce annulaire 182c de l'arbre qui comporte la nervure 214 et qui est engagée sur une autre pièce 182d de l'arbre comportant les canalisations 182b. La pièce 182c comportant la nervure 214 est serrée axialement contre la bague interne 232 du palier 230 par un écrou 260 vissé à l'extrémité amont de l'arbre 182 et en particulier de la pièce 182d.

Dans l'exemple représenté, en plus des pièces 182c et 182d, l'arbre 182 comprend une autre pièce annulaire 182e qui s'étend sur toute la longueur de la pièce 182d, à l'intérieur de celle-ci, et qui définit la conduite 212 avec cette pièce 182d. La pièce 182e porte un joint d'étanchéité à chacune de ses extrémités axiales, qui est destiné à coopérer avec la périphérie interne de la pièce 182d.

La figure 3 permet de constater que l'arbre 182 s'étend autour de l'arbre BP 36 dont l'extrémité amont est accouplée au solaire 48a du réducteur 48 par les cannelures précitées.

Le palier lisse P est alimenté en huile directement par les canalisations 180b de l'anneau 180. On comprend que l'épaisseur radiale de l'espace entre la frette 204 et la surface 182b est calculée pour que des fuites maitrisées aient lieu aux interfaces entre les canalisations 180b, 182b, de façon à alimenter le palier lisse P. L'huile se répand alors sur toute l'étendue axiale du palier lisse P et jusqu'aux paliers à roulement 220, 230 en vue de leur lubrification.

On entend par « voie » du dispositif 174, l'association d'une canalisation 180b de l'anneau 180 avec une canalisation 182b de l'arbre 182. Dans l'exemple représenté, le dispositif 174 comprend quatre voies. De manière préférée, une des voies est utilisée pour l'alimentation en huile du réducteur, une autre des voies est utilisée pour l'alimentation en huile de l'actionneur 62, et une autre des voies est utilisée pour le retour d'huile de l'actionneur 62. Enfin, la dernière voie peut être utilisée pour la protection hydraulique de l'actionneur.

Le dispositif 174 est par exemple configuré pour alimenter l'actionneur 62 à une pression d'huile comprise entre 2 et 200 bars, et de préférence entre 5 et 130 bars.

Le support annulaire 250 s'étend au moins en partie autour de l'anneau 180 et porte les douilles 192 de raccordement fluidique aux canalisations 180b de l'anneau 180. Le support 250 comprend plusieurs parois annulaires et des organes de fixation au carter 42, qui sont formés dans l'exemple représenté par des brides annulaires 252, 254.

Le support 250 est de préférence configuré pour se déformer élastiquement de façon à autoriser des déplacements du palier 60 en direction radiale. Ce support 250 est indépendant de l'anneau 180 dans la mesure où ils ne sont pas fixés rigidement l'un à l'autre.

Dans l'exemple représenté, le support 250 comprend des parois tronconiques 256, 258 dont au moins une peut être ajourée, c'est-à-dire peut comprendre des ajours traversants, de façon à réduire sa rigidité en direction radiale. Cette rigidité peut également être réduite en réduisant l'épaisseur de cette paroi.

Une première paroi tronconique 256 du support 250 s'étend sensiblement radialement et est reliée à sa périphérie externe à la bride 252 de fixation au carter 42. A sa périphérie interne, cette paroi 256 comprend des canalisations 290 intégrées comportant à chacune de ses extrémités des ports 292, 294.

Le nombre de canalisations 290 est égal au nombre de canalisations 180b de l'anneau 180 et est de quatre dans l'exemple représenté. Seule une de ces canalisations 290 est visible aux figures 3 et 4. Chacune des canalisations 290 a une forme coudée dont une extrémité radialement interne est raccordée au port 292 qui s'étend axialement vers l'amont en regard d'un des ports 190 précités, afin de recevoir par engagement mâle-femelle une extrémité d'une douille 192 engagée dans ce port 190. L'extrémité radialement externe de chaque canalisation 290 est raccordée au port 294 qui s'étend radialement vers l'amont et vers l'extérieur pour recevoir par engagement mâle-femelle l'extrémité radialement interne d'une conduite 296 d'alimentation en huile.

Le support 250 comprend une deuxième paroi tronconique 258 qui s'étend radialement vers l'extérieur de l'amont vers l'aval. Cette deuxième paroi 258 comprend à sa périphérie externe la bride 254 de fixation au carter 42. La bride 254' du carter 42, qui est fixée aux brides 252, 254, s'étend dans un plan perpendiculaire à l'axe A, qui passe entre les paliers 220, 230.

La périphérie interne de la paroi 258 est située en amont de l'anneau 180 et porte la bague externe du palier 60 précité dans l'exemple représenté. Comme évoqué dans ce qui précède, le support 250 et en particulier sa paroi 258 comprend des ouvertures 270 de passage des conduites 296 d'alimentation en huile.

Chacune des canalisations 296 s'étend radialement, d'abord à travers les ouvertures 270, et d'autre part à travers des bras tubulaires 42b du carter d'entrée 42 qui sont situés dans la veine d'écoulement du flux primaire F2. Ces canalisations 296 vont ensuite traverser les aubes directrices 42a qui sont situées dans la veine d'écoulement du flux secondaire F3, pour rejoindre le système de lubrification situé dans la nacelle (voir figure 1). Une alternative consiste à monter le système de lubrification dans le moteur (entre la veine primaire - compresseurs 14 et 16) et le carter 70 de la veine secondaire, de façon à ce que ces conduites 192 ne traversent pas le flux secondaire F3.

La figure 5 permet également de constater que le câble 201 suit le même chemin que les conduites 296 et passe à travers une des ouvertures 270 et des bras 42a, 42b. L'extrémité du câble 251 opposée à la goupille est tenue par un opérateur depuis l'extérieur de la turbomachine 10.

La figure 5 permet également de constater que l'anneau 180 comprend au moins un premier organe d'indexage 298 orienté axialement, tel qu'une rainure, et configuré pour coopérer par engagement avec au moins un second organe d'indexage 300 orienté axialement, tel qu'un doigt, qui est ici porté par une des douilles 192 ou par la paroi 256 du support 250 lors de l'assemblage du dispositif 174 et de la turbomachine 10.

L'anneau 180 est ainsi maintenu vis-à-vis du support par l'intermédiaire de ce doigt ou analogue. La rainure accueillant ce doigt est de préférence orientée axialement et radialement pour autoriser un déplacement axial et radial du doigt.

Les figures 5 à 7 montrent un procédé d'assemblage du dispositif 174.

Les pièces 182c, 182d et 182e du dispositif 174 sont assemblées et fixées les unes autres aux autres (cf. figure 7). Le dispositif 174 se présente alors sous la forme d'une cartouche pré-assemblée. L'arbre 182 du dispositif 174 est ensuite fixé sur le porte-satellites 48d du réducteur 48 au moyen des vis 216 (figures 5 et 6).

Les extrémités aval des douilles 192 sont engagées dans les ports 292 et les conduites 296 sont engagées dans les ports 294 (figure 5).

La goupille 199 attachée au câble 201 est engagée dans l'orifice 199' et l'évidement 199", ce qui permet d'immobiliser provisoirement en rotation l'anneau 180 sur l'arbre 182. Le câble 201 est passé à travers une des ouvertures 270 puis à travers des bras 42a, 42b alignés du carter 42 (figures 5 et 7).

Le dispositif 174 sous forme de cartouche qui est solidaire du réducteur 48 est rapproché par translation axiale du reste de la turbomachine pour que les extrémités amont des douilles 192 s'engagent dans les ports 190 de l'anneau 180. Ce montage est réalisé en aveugle et est guidé par la coopération des organes d'indexage 298, 300. A mesure de cette translation, l'opérateur tire sur le câble 201 pour qu'il reste relativement tendu en permanence (figure 5).

Les figures 3 et 5 permettent de voir que l'arbre 182 est alors intercalé entre l'arbre BP 36, dont l'extrémité amont est accouplée au solaire 48a du réducteur, et l'anneau 180, et que la bague externe portée par le support 250, et en particulier la paroi 258, recouvre les rouleaux du palier 60 situés avec la bague interne de ce palier sur le rebord 48e du porte-satellites 48d.

## Revendications

1. Module de soufflante pour une turbomachine d'aéronef, ce module comportant une soufflante (12) qui comporte un arbre de soufflante (46) et des aubes de soufflante (12a) à calage variable, et un dispositif (174) de transfert d'huile qui est configuré pour assurer un transfert d'huile entre un stator et un actionneur (62) qui est solidaire en rotation de l'arbre de soufflante (46) et qui est configuré pour contrôler le calage des aubes de soufflante, ce dispositif comportant :
- un anneau de stator (180) comportant une surface cylindrique interne (180a) et des canalisations internes (180b) d'huile qui débouchent chacune sur ladite surface cylindrique interne (180a), et
- un arbre (182) engagé dans ledit anneau (180) et comportant une surface cylindrique externe (182a) s'étendant à l'intérieur de ladite surface cylindrique interne (180a), l'arbre comportant des canalisations internes (182b) d'huile qui débouchent chacune sur ladite surface cylindrique externe (182a), l'arbre (182) comportant en outre un organe de fixation configuré pour être fixé à un rotor de la turbomachine pour son entraînement en rotation autour d'un axe (A),
**caractérisé en ce qu'**il comprend en outre :
- un palier lisse (P) situé entre lesdites surfaces cylindriques interne (180a) et externe (182a), et
- des paliers à roulement (220, 230) montés entre l'anneau (180) et l'arbre (182), de part et d'autre du palier lisse (P),
et **en ce que** l'anneau (180) est monté avec un degré de liberté en direction axiale sur l'arbre (182) et est immobilisé en direction circonférentielle autour de l'arbre (182) par l'intermédiaire de premiers éléments (190, 298) portés par l'anneau (180) et configurés pour coopérer par engagement mâle-femelle en direction axiale avec des seconds éléments (192, 300) complémentaires portés par ledit stator.

2. Module selon la revendication précédente, dans lequel l'anneau (180) comprend des premiers ports (190) de raccordement fluidique débouchant en direction axiale, ces premiers ports (190) étant raccordés aux canalisations internes (180b) de l'anneau (180) et étant configurés pour coopérer par ledit engagement mâle-femelle avec des extrémités de conduites (296) ou de douilles (192) d'alimentation en huile.

3. Module selon la revendication précédente, dans lequel le nombre de premiers ports (190) est égal au nombre de canalisations (296) de l'anneau (180), les premiers ports (190) étant raccordés à des canalisations (180b) différentes de l'anneau.

4. Module selon la revendication 2 ou 3, dans lequel les premiers ports (190) sont situés sensiblement dans un même plan perpendiculaire audit axe (A).

5. Module selon l'une des revendications précédentes, dans lequel l'anneau (180) comprend un orifice (199') de montage d'une goupille (199) provisoire d'immobilisation en rotation de l'anneau (180) sur l'arbre (182), cette goupille (199) étant configurée pour être engagée dans un évidement (199") du rotor précité de la turbomachine lors du montage du dispositif (174) puis à être retiré après ce montage.

6. Module selon la revendication précédente, dans lequel l'orifice (199') a une orientation sensiblement radiale et est formé à la périphérie externe de l'anneau (180).

7. Module selon l'une des revendications précédentes, dans lequel l'un des paliers à roulement (220) est à rouleaux et l'autre des paliers à roulement (230) est à billes.

8. Module selon l'une des revendications précédentes, dans lequel l'anneau (180) comprend un premier organe d'indexage (298) orienté axialement, tel qu'une rainure, et configuré pour coopérer par ledit engagement mâle-femelle avec un second organe d'indexage (300) orienté axialement, tel qu'un doigt, porté par le stator de la turbomachine.

9. Module selon l'une des revendications précédentes, dans lequel la soufflante (12) est entrainée en rotation par un réducteur (48), ledit dispositif étant monté en aval du réducteur (48) et étant configuré pour alimenter en huile le réducteur (48) ainsi que l'actionneur (62) par des conduites traversant axialement le réducteur, et en particulier un porte-satellites (48d) du réducteur.

10. Module selon la revendication précédente, dans lequel l'arbre (182) du dispositif est fixé au porte-satellites (48d) du réducteur (48), et l'anneau (180) du dispositif est fixé à un carter intermédiaire (42) par un support annulaire (250) qui entoure au moins en partie le dispositif (174).

11. Module selon la revendication précédente, dans lequel un palier à roulement (60), et en particulier à rouleaux, est monté entre le porte-satellites (48d) et ledit support (250).

12. Module selon la revendication 10 ou 11, dans lequel le support (250) comprend une paroi annulaire (258) comprenant des ouvertures (270) de passage de conduites (296) d'alimentation en huile des canalisations (180b) de l'anneau (180), et de préférence également de passage provisoire d'un câble (201) reliée à une goupille (199) d'immobilisation en rotation de l'anneau (180) sur l'arbre (182).

13. Module selon l'une des revendications 10 à 12, dans lequel le support (250) comprend une paroi annulaire (256) comprenant :
- des seconds ports (294) configurés pour coopérer par un autre engagement mâle-femelle avec des extrémités de conduites (296) d'alimentation en huile, ces seconds ports (294) débouchant radialement vers l'extérieur, et
- des troisièmes ports (292) raccordés aux seconds ports (294) et configurés pour coopérer par ledit engagement mâle-femelle avec des extrémités de douilles (192) d'alimentation en huile dont des extrémités opposées sont engagées dans lesdits premiers ports (190) de l'anneau (190).

14. Procédé d'assemblage d'un module selon l'une des revendications 2 à 4, comprenant les étapes de :
a) montage de l'anneau (180) sur l'arbre (182) du dispositif (174),
b) fixation de l'arbre (182) du dispositif (174) au rotor de la turbomachine,
c) montage de conduites (296) et/ou de douilles (192) d'alimentation en huile sur ledit stator de la turbomachine, et
d) déplacement en translation du rotor et du dispositif (174) vers le stator, jusqu'à ce que les premiers ports (190) du dispositif coopèrent avec lesdites conduites (296) ou douilles (192).

15. Procédé selon la revendication précédente, dans lequel :
- le module étant tel que défini à la revendication 12, le procédé comprend, après l'étape d), une étape e) de retrait de la goupille (199), cette goupille étant relié à un câble (201) qui est tiré depuis l'extérieur de la turbomachine, et/ou
- le module étant tel que défini à la revendication 14, le procédé comprend, lors de l'étape d), la coopération par engagement desdits premier et second organes (298, 300).

## Patentansprüche

1. Gebläsemodul für ein Turbotriebwerk eines Luftfahrzeugs, wobei dieses Modul ein Gebläse (12) umfasst, das eine Gebläsewelle (46) und Gebläseschaufeln (12a) mit variabler Feststellposition und eine Vorrichtung (174) zum Transferieren von Öl umfasst, die konfiguriert ist, um einen Transfer von Öl zwischen einem Stator und einer Betätigungsvorrichtung (62) sicherzustellen, der mit der Gebläsewelle (46) drehfest ist und der konfiguriert ist, um die Feststellposition der Gebläseschaufeln zu steuern, wobei diese Vorrichtung umfasst:
- einen Statorring (180), umfassend eine interne zylindrische Oberfläche (180a) und interne Ölkanäle (180b), die jeweils auf der internen zylindrischen Oberfläche (180a) münden, und
- eine Welle (182), die in dem Ring (180) in Eingriff steht und eine äußere zylindrische Oberfläche (182a) umfasst, die sich im Inneren der inneren zylindrischen Oberfläche (180a) erstreckt, wobei die Welle innere Ölrohre (182b) umfasst, die jeweils auf der äußeren zylindrischen Oberfläche (182a) münden, wobei die Welle (182) weiter ein Befestigungsorgan umfasst, das konfiguriert ist, um an einem Rotor des Turbotriebwerks für seinen Drehantrieb um eine Achse (A) befestigt zu werden, **dadurch gekennzeichnet, dass** er weiter umfasst:
- ein Gleitlager (P), das sich zwischen der inneren (180a) und äußeren (182a) zylindrischen Oberfläche befindet, und
- Wälzlager (220, 230), die zwischen dem Ring (180) und der Welle (182), beidseits des Gleitlagers (P), montiert sind,
und dadurch, dass der Ring (180) mit einem Freiheitsgrad in axialer Richtung auf der Welle (182) gelagert und in Umfangsrichtung um die Welle (182) über erste Elemente (190, 298), die an dem Ring (180) vorgesehen sind und konfiguriert sind, um durch formschlüssiges Ineinandergreifen in axialer Richtung mit zweiten, komplementären Elementen (192, 300) zusammenzuwirken, die an dem Stator vorgesehen sind, arretiert ist.

2. Modul nach dem vorstehenden Anspruch, wobei der Ring (180) erste Anschlussöffnungen (190) für die fluidische Verbindung umfasst, die in axialer Richtung münden, wobei diese ersten Anschlussöffnungen (190) mit den inneren Kanälen (180b) des Rings (180) verbunden und konfiguriert sind, um durch das formschlüssige Ineinandergreifen mit Enden von Leitungen (296) oder Buchsen (192) für die Ölversorgung zusammenzuwirken.

3. Modul nach dem vorstehenden Anspruch, wobei die Anzahl der ersten Anschlussöffnungen (190) gleich der Anzahl der Kanäle (296) des Rings (180) ist, wobei die ersten Anschlussöffnungen (190) mit verschiedenen Kanälen (180b) des Rings verbunden sind.

4. Modul nach Anspruch 2 oder 3, wobei die ersten Anschlussöffnungen (190) im Wesentlichen in derselben Ebene senkrecht zur Achse (A) angeordnet sind.

5. Modul nach einem der vorstehenden Ansprüche, wobei der Ring (180) eine Bohrung (199') zur Montage eines vorläufigen Stifts (199) zur Arretierung der Drehung des Rings (180) auf der Welle (182) umfasst, wobei dieser Stift (199) konfiguriert ist, um während der Montage der Vorrichtung (174) in eine Aussparung (199") des zuvor genannten Rotors des Turbotriebwerks einzugreifen und danach entfernt zu werden.

6. Modul nach dem vorstehenden Anspruch, wobei die Bohrung (199') eine im Wesentlichen radiale Ausrichtung hat und an der äußeren Peripherie des Rings (180) ausgebildet ist.

7. Modul nach einem der vorstehenden Ansprüche, wobei eines der Wälzlager (220) ein Rollenlager und das andere der Wälzlager (230) ein Kugellager ist.

8. Modul nach einem der vorstehenden Ansprüche, wobei der Ring (180) ein erstes, axial ausgerichtetes Indexierelement (298), wie beispielsweise eine Nut, umfasst, das konfiguriert ist, um durch das formschlüssige Ineinandergreifen mit einem zweiten, axial ausgerichteten Indexierelement (300), wie beispielsweise einem Finger, zusammenzuwirken, das am Stator des Turbotriebwerks angebracht ist.

9. Modul nach einem der vorstehenden Ansprüche, wobei das Gebläse (12) durch ein Untersetzungsgetriebe (48) in Drehung versetzt wird, wobei die Vorrichtung stromabwärts des Untersetzungsgetriebes (48) angebracht ist und konfiguriert ist, um das Untersetzungsgetriebe (48) sowie die Betätigungsvorrichtung (62) über Leitungen, die das Untersetzungsgetriebe axial durchqueren, und insbesondere einen Planetenträger (48d) des Untersetzungsgetriebes, mit Öl zu versorgen.

10. Modul nach dem vorstehenden Anspruch, wobei die Welle (182) der Vorrichtung am Planetenträger (48d) des Untersetzungsgetriebes (48) befestigt ist und der Ring (180) der Vorrichtung an einem Zwischengehäuse (42) durch einen ringförmigen Träger (250) befestigt ist, der die Vorrichtung (174) zumindest teilweise umgibt.

11. Modul nach dem vorstehenden Anspruch, wobei ein Wälzlager (60), und insbesondere ein Rollenlager, zwischen dem Planetenträger (48d) und der Stütze (250) angebracht ist.

12. Modul nach Anspruch 10 oder 11, wobei der Träger (250) eine ringförmige Wand (258) umfasst, die Durchgangsöffnungen (270) für Leitungen (296) der Ölversorgung der Kanäle (180b) des Rings (180) und vorzugsweise auch für den vorläufigen Durchgang eines Kabels (201) umfasst, das mit einem Stift (199) zur Arretierung der Drehung des Rings (180) auf der Welle (182) verbunden ist.

13. Modul nach einem der Ansprüche 10 bis 12, wobei der Träger (250) eine ringförmige Wand (256) umfasst, die:
- zweite Anschlussöffnungen (294) umfasst, die konfiguriert sind, um durch ein weiteres formschlüssiges Ineinandergreifen mit Enden von Leitungen (296) für die Ölversorgung zusammenzuwirken, wobei diese zweiten Anschlussöffnungen (294) radial nach außen münden, und
- dritte Anschlussöffnungen (292) umfasst, die mit den zweiten Anschlussöffnungen (294) verbunden und konfiguriert sind, um durch das formschlüssige Ineinandergreifen mit Enden von Buchsen (192) für die Ölversorgung zusammenzuwirken, deren gegenüberliegende Enden in die ersten Anschlussöffnungen (190) des Rings (190) eingreifen.

14. Verfahren zum Zusammenbau eines Moduls nach einem der Ansprüche 2 bis 4, umfassend die folgenden Schritte:
a) Montage des Rings (180) auf der Welle (182) der Vorrichtung (174),
b) Befestigung der Welle (182) der Vorrichtung (174) am Rotor des Turbotriebwerks,
c) Montage von Leitungen (296) und/oder Buchsen (192) für die Ölversorgung an dem Stator des Turbotriebwerks, und
d) Verschiebung des Rotors und der Vorrichtung (174) durch Translation in Richtung des Stators, bis die ersten Anschlussöffnungen (190) der Vorrichtung mit den Leitungen (296) oder Buchsen (192) zusammenwirken.

15. Verfahren nach dem vorstehenden Anspruch, wobei:
- das Modul wie in Anspruch 12 definiert ist, das Verfahren nach Schritt d) einen Schritt e) des Entfernens des Stifts (199) umfasst, wobei dieser Stift mit einem Kabel (201) verbunden ist, das von außen des Turbotriebwerks gezogen wird, und/oder
- das Modul wie in Anspruch 14 definiert ist, das Verfahren während Schritt d) das Zusammenwirken durch Ineinandergreifen des ersten und zweiten Indexierelements (298, 300) umfasst.

## Claims

1. A fan module for an aircraft turbine engine, this module comprising a fan (12) that comprises a fan shaft (46) and variable pitch fan vanes (12a), and an oil transfer device (174) that is configured to ensure a transfer of oil between a stator and an actuator (62) that is secured in rotation to the fan shaft (46) and that is configured to control the pitch of the fan vanes, this device comprising:
- a stator annulus (180) comprising an internal cylindrical surface (180a) and internal oil pipes (180b) each opening onto said internal cylindrical surface (180a), and
- a shaft (182) engaged in said annulus (180) and comprising an external cylindrical surface (182a) extending inside said internal cylindrical surface (180a), the shaft comprising internal oil pipes (182b) that each open out onto said external cylindrical surface (182a), the shaft (182) further comprising an attachment member configured to be attached to a rotor of the turbine engine to drive it in rotation about an axis (A),
**characterised in that** it further comprises:
- a plain bearing (P) located between said internal (180a) and external (182a) cylindrical surfaces, and
- rolling bearings (220, 230) mounted between the annulus (180) and the shaft (182), on either side of the plain bearing (P),
and **in that** the annulus (180) is mounted with a degree of freedom in the axial direction on the shaft (182) and is immobilised in the circumferential direction about the shaft (182) by means of first elements (190, 298) carried by the annulus (180) and configured to cooperate by male-female engagement in the axial direction with complementary second elements (192, 300) carried by said stator.

2. The module according to the preceding claim, wherein the annulus (180) comprises first fluidic connection ports (190) opening out in the axial direction, these first ports (190) being connected to the internal pipes (180b) of the annulus (180) and being configured to cooperate by said male-female engagement with ends of oil supply conduits (296) or sockets (192).

3. The module according to the preceding claim, wherein the number of first ports (190) is equal to the number of pipes (296) in the annulus (180), the first ports (190) being connected to different pipes (180b) in the annulus.

4. The module according to claim 2 or 3, wherein the first ports (190) are located substantially in the same plane perpendicular to said axis (A).

5. The module according to one of the preceding claims, wherein the annulus (180) comprises an orifice (199') for mounting a temporary pin (199) for immobilising the annulus (180) against rotation on the shaft (182), this pin (199) being configured so as to be engaged in a recess (199") of the aforementioned rotor of the turbine engine when the device (174) is mounted and then to be removed after this mounting.

6. The module according to the preceding claim, wherein the orifice (199') has a substantially radial orientation and is formed at the external periphery of the annulus (180).

7. The module according to one of the preceding claims, wherein one of the rolling bearings (220) is with roller bearing and the other of the rolling bearings (230) is ball bearing.

8. The module according to one of the preceding claims, wherein the annulus (180) comprises a first axially oriented indexing member (298), such as a groove, and configured to cooperate by said male-female engagement with a second axially oriented indexing member (300), such as a finger, carried by the stator of the turbine engine.

9. The module according to one of the preceding claims, wherein the fan (12) is driven in rotation by a gearbox (48), said device being mounted downstream of the gearbox (48) and being configured to supply oil to the gearbox (48) and to the actuator (62) via conduits passing axially through the gearbox, and in particular a planet carrier (48d) of the gearbox.

10. The module according to the preceding claim, wherein the shaft (182) of the device is attached to the planet carrier (48d) of the gearbox (48), and the annulus (180) of the device is attached to an intermediate casing (42) by an annular support (250) which at least partly surrounds the device (174).

11. The module according to the preceding claim, wherein a rolling bearing (60), in particular a roller bearing, is mounted between the planet carrier (48d) and said support (250).

12. The module according to claim 10 or 11, wherein the support (250) comprises an annular wall (258) comprising openings (270) for the passage of conduits (296) for supplying oil to the pipes (180b) of the annulus (180), and preferably also for the temporary passage of a cable (201) connected to a pin (199) for immobilising the annulus (180) in rotation on the shaft (182).

13. The module according to one of claims 10 to 12, wherein the support (250) comprises an annular wall (256) comprising:
- second ports (294) configured to cooperate by further male-female engagement with ends of oil supply conduits (296), these second ports (294) opening radially outwards, and
- third ports (292) connected to the second ports (294) and configured to cooperate by said male-female engagement with ends of oil supply sockets (192), opposite ends of which are engaged in said first ports (190) of the annulus (190).

14. A method for assembling a module according to one of claims 2 to 4, comprising the steps of:
a) mounting the annulus (180) on the shaft (182) of the device (174),
b) attaching the shaft (182) of the device (174) to the rotor of the turbine engine,
c) mounting oil supply conduits (296) and/or sockets (192) on said stator of the turbine engine, and
d) displacing in translation the rotor and the device (174) towards the stator, until the first ports (190) of the device cooperate with said conduits (296) or sockets (192).

15. The method according to the preceding claim, wherein:
- the module being as defined in claim 12, the method comprises, after step d), a step e) of removing the pin (199), this pin being connected to a cable (201) which is pulled from outside the turbine engine, and/or
- the module being as defined in claim 14, the method comprises, in step d), the cooperation by engagement of said first and second members (298, 300).
